# EUROPEAN PATENT SPECIFICATION

(11) **EP 4 758 341 B1**
(45) Date of publication and mention of the grant of the patent: **11.11.2026**
(21) Application number: 24751982.0
(22) Date of filing: 19.07.2024
(51) Int. Cl.: F03D 7/02, F03D 17/00

(54) **OPERATING WIND TURBINE WITH DAMAGED YAW RING**
BETRIEB EINER WINDTURBINE MIT BESCHÄDIGTEM GIERRING
MISE EN FONCTIONNEMENT D'UNE ÉOLIENNE AVEC BAGUE DE LACET ENDOMMAGÉE

(30) Priority: 10.08.2023 IN 202311053724; 22.09.2023 DK PA202330224
(43) Date of publication of application: 17.06.2026
(73) Proprietor: VESTAS WIND SYSTEMS A/S, 8200 Aarhus N (DK)
(72) Inventor: SUMAN, Rishi, 8200 Aarhus N (DK); RATHEE, Himanshu, 8200 Aarhus N (DK); JAMUNA, Karthik Krishnan, 8200 Aarhus N (DK)
(74) Representative: Vestas Patents Department
(86) International application number: PCT/DK2024/050179
(87) International publication number: WO 2025/031551

(56) References cited:
- WO-A1-2019/229081
- CN-A- 112 443 454
- US-B2- 10 634 119

## Description

### FIELD OF THE INVENTION

The present invention relates to a method of operating a wind turbine, a control system configured to operate a wind turbine, and a wind turbine comprising such a control system. In particular the present invention relates to a method, and associated apparatus, for operating a wind turbine comprising a yaw ring with a damaged or missing tooth.

### BACKGROUND OF THE INVENTION

Wind turbines normally comprise a wind turbine tower mounted on a foundation or similar structure, which is anchored to the ground or the sea bed or may be floating, the wind turbine tower extending along a longitudinal direction which is normally substantially vertical. A nacelle carrying a rotor with one or more wind turbine blades is normally mounted on the wind turbine tower via a yaw system. The yaw system allows the nacelle to perform yaw movements, i.e. rotating movements about a rotation axis which substantially coincides with the longitudinal direction of the wind turbine tower, relative to the wind turbine tower. Thereby the rotor can be appropriately directed relative to the direction of the wind, also when the direction of the wind changes.

The yaw system may be of an active kind, where the nacelle is actively yawed by means of yaw drives, e.g. in response to measurements of the wind direction. As an alternative, the yaw system may be of a passive kind, where the nacelle is allowed to passively follow the direction of the wind. This is sometimes referred to as 'free yawing'. As another alternative, the yaw system may be of a kind which is sometimes operated in an active manner and sometimes in a passive manner.

US10634119B2 discloses a method of operating a wind turbine yaw assembly comprising a yaw ring and a number of yaw drive units. A yaw drive unit comprises a pinion arranged to engage with the yaw ring. The method comprises the steps of identifying a damaged tooth on the yaw ring; providing damage descriptor parameters to a yaw drive controller; and controlling a yaw drive unit on the basis of the damage descriptor parameters to reduce the force exerted by its pinion on a damaged tooth.

In WO2021/209110A1 a method for controlling a yaw system of a wind turbine is disclosed. The yaw system comprises a toothed yaw ring connected to one of a tower or a nacelle and an active yaw mechanism comprising at least one yaw drive connected to the other of the tower or the nacelle. Each yaw drive comprises a pinion configured to be arranged in engagement with the toothed yaw ring and a drive mechanism configured to drive the pinion. In the case that a wind speed and/or a turbulence and/or wind driven loads on the wind turbine exceeds a predefined threshold value, the active yaw mechanism is decoupled by decoupling at least the drive mechanism of at least one of the yaw drives from the yaw system. Subsequently the nacelle is allowed to perform yaw movements relative to the tower by means of free yawing.

### SUMMARY OF THE INVENTION

A first aspect of the invention provides a method of operating a wind turbine, the wind turbine comprising a rotor and a yaw system, the yaw system comprising: a yaw ring and a pinion engaging the yaw ring, the method comprising: a) operating the yaw system to yaw the rotor in response to wind direction changes, thereby changing a rotor yaw direction; b) identifying a location of a damaged or missing tooth of the yaw ring; c) based on the identified location of the damaged or missing tooth and the location of the pinion, determining a safe sector and a restricted sector, wherein the pinion coincides with the location of the damaged or missing tooth when the rotor yaw direction is in the restricted sector; d) generating power with the rotor when the rotor yaw direction is in the safe sector; and e) disabling or otherwise modifying the operation of the wind turbine to substantially avoid generation of power by the rotor with the rotor yaw direction in the restricted sector.

Optionally the wind turbine further comprises a yaw function which automatically controls the yaw system in step a) to yaw the rotor in response to wind direction changes; and step e) comprises: in response to a wind direction change from the safe sector into the restricted sector, disabling or otherwise modifying the yaw function to prevent the yaw system from changing the rotor yaw direction from the safe sector into the restricted sector.

Optionally step e) comprises: in response to a wind direction change from the safe sector into the restricted sector, shutting down or otherwise modifying the operation of the wind turbine so that substantially no power is generated by the rotor.

Optionally the pinion is one of a group of adjacent pinions that each engage the yaw ring, the restricted sector and the safe sector are determined based on the location of the group of adjacent pinions, and the group of adjacent pinions coincide with the location of the damaged or missing tooth when the rotor yaw direction is in the restricted sector.

Optionally the yaw system has two or more pinions each engaging the yaw ring at a respective location; step b) comprises: based on the identified location of the damaged or missing tooth and the locations of the pinions, determining two or more safe sectors and two or more restricted sectors, wherein the safe sectors alternate with the restricted sectors, and when the rotor yaw direction is in each restricted sector a location of a respective one of the pinions coincides with the location of the damaged or missing tooth; and step e) comprises: disabling or otherwise modifying the operation of the wind turbine to substantially avoid generation of power by the rotor with the rotor yaw direction in the restricted sectors.

Optionally step e) comprises: in response to a wind direction change from one of the safe sectors into one of the restricted sectors, disabling or otherwise modifying the yaw function to prevent the yaw system from changing the rotor yaw direction from the one of the safe sectors into the one of the restricted sectors.

Optionally the method further comprises: in response to a wind direction change from a first one of the safe sectors to a second one of the safe sectors, operating the yaw system to change the rotor yaw direction from the first one of the safe sectors to a second one of the safe sectors, the rotor yaw direction passing through an intervening one of the restricted sectors as it does so; wherein as the rotor yaw direction passes through the intervening one of the restricted sectors, the location of one of the pinions coincides with the location of the damaged or missing tooth.

Optionally step e) comprises: in response to the wind direction change, shutting down or otherwise modifying the operation of the wind turbine so that substantially no power is generated by the rotor as the rotor yaw direction passes through the intervening one of the restricted sectors.

Optionally step d) comprises: generating power with the rotor when the rotor yaw direction is in the first one of the safe sectors; and the method further comprises: generating power with the rotor when the rotor yaw direction is in the second one of the safe sectors.

Optionally shutting down or otherwise modifying the operation of the wind turbine so that substantially no power is generated by the rotor comprises: changing a pitch of or more blades of the rotor.

Optionally the restricted sector is determined in step c) by: identifying a range of angles where the location of the pinion coincides with the location of the damaged or missing tooth; and adding a buffer at each edge of the range of angles.

Optionally the wind turbine further comprises a yaw function which automatically controls the yaw system in step a) to yaw the rotor in response to wind direction changes above a threshold; and the method further comprises: increasing the threshold in response to the rotor yaw direction approaching an edge of the safe sector.

A further aspect of the invention provides a control system configured to operate a wind turbine by a method according to the preceding aspect.

A further aspect of the invention provides a wind turbine comprising: a rotor; a yaw system comprising a yaw ring and a pinion engaging the yaw ring; and a control system according to the preceding aspect.

A computer program product comprising software code adapted to operate a wind turbine when executed on a data processing system, the computer program product being adapted to perform the method of the first aspect.

### BRIEF DESCRIPTION OF THE DRAWINGS

Embodiments of the invention will now be described with reference to the accompanying drawings, in which:
Figure 1 shows a wind turbine;
Figure 2 schematically illustrates an embodiment of a control system together with elements of the wind turbine;
Figure 3 shows a yaw system;
Figure 4 shows a method of operating the wind turbine;
Figure 5 shows a rotor yaw direction at a boundary between a restricted sector and a safe sector;
Figure 6 shows a rotor yaw direction at another boundary between a restricted sector and a safe sector;
Figure 7 shows further detail of the process of Figure 4;
Figure 8 shows an example of how the yaw function may operate;
Figure 9 shows a modified example of how the yaw function may operate;
Figure 10 shows an example of a damaged sector; and
Figure 11 shows the yaw ring with three enlarged restricted sectors.

### DETAILED DESCRIPTION OF EMBODIMENT(S)

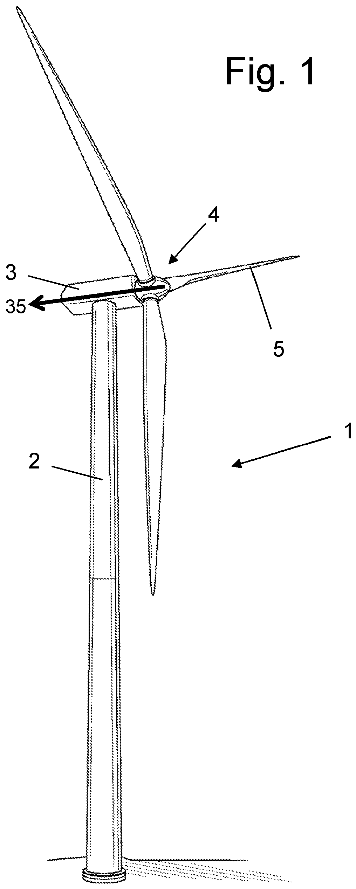

Figure 1 illustrates, in a schematic perspective view, a wind turbine 1. The wind turbine 1 includes a tower 2 and a rotor-nacelle assembly (RNA) at the top of the tower 2. The RNA includes a nacelle 3 and a rotor 4 operatively coupled to a generator housed inside the nacelle 3. In addition to the generator, the nacelle 3 houses various components required for converting wind energy into electrical energy and various components needed to operate and control the wind turbine 1.

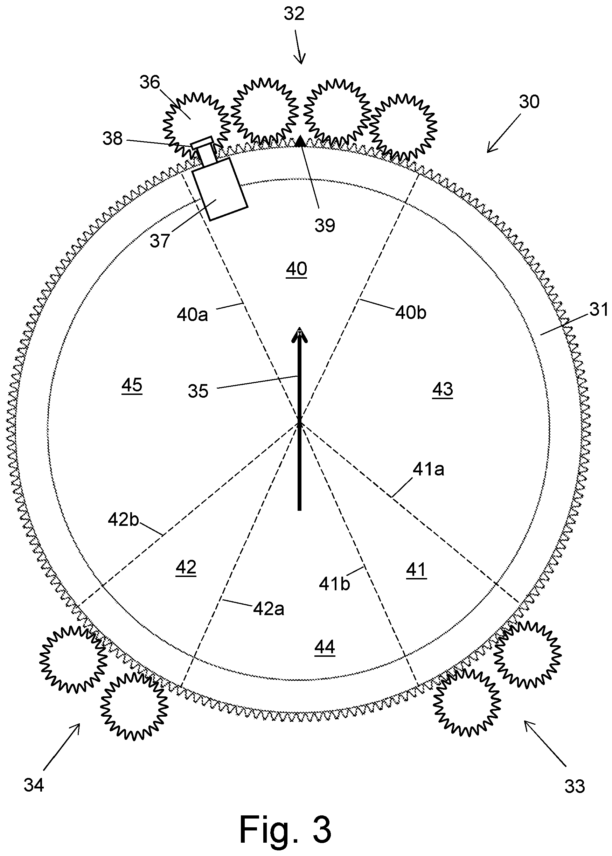

The rotor 4 includes a central hub and a plurality of blades 5 that project outwardly from the central hub. In the illustrated wind turbine 1, the rotor 4 includes three blades 5, but the number may vary. The rotor rotates about a rotor axis and generates a thrust force aligned with the rotor axis. The yaw angle of the rotor axis defines a rotor yaw direction which is indicated in Figures 1 and 3 by an arrow 35 pointing in the direction of the thrust force.

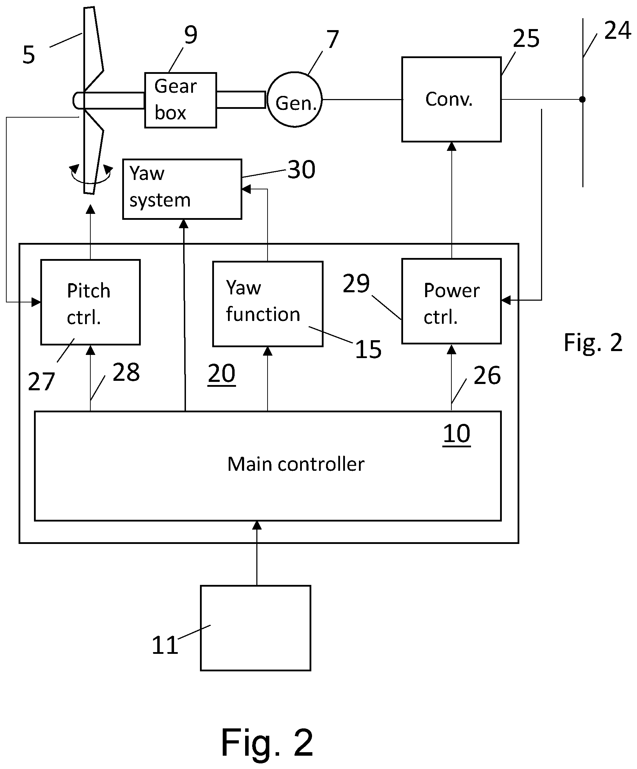

Figure 2 schematically illustrates an embodiment of a control system 20 together with elements of the wind turbine 1. The rotor is mechanically connected to an electrical generator 7 via a gearbox 9 (in direct drive systems the gear box is not present). The electrical power generated by the generator 7 is injected into a power grid 24 via an electrical converter 25. The electrical generator 7 and the converter 25 may be based on a full scale converter (FSC) architecture or a doubly fed induction generator (DFIG) architecture, but other types may be used

The control system 20 comprises a number of elements, including at least one main controller 10 with a processor and a memory, so that the processor is capable of executing computing tasks based on instructions stored in the memory. In general, the main controller 10 ensures that in operation the wind turbine generates a requested power output level. This is obtained by adjusting the pitch angle of the blades and/or the power extraction of the converter 25. To this end, the control system 20 comprises a pitch system including a pitch controller 27 using a pitch reference signal 28, and a power system including a power controller 29 using a power reference signal 26. The rotor blades 5 can be pitched by a pitch mechanism. The rotor comprises an individual pitch system which is capable of individual pitching of the rotor blades 5, and may comprise a common pitch system which adjusts all pitch angles on all rotor blades at the same time. The control system 20, or elements of the control system 20, may be connected to a power plant controller (not shown) or other control system to receive externally provided instructions.

The wind turbine 1 also comprises a yaw system 30 configured to rotate the RNA 3,4 about a vertical yaw axis, in order to control the rotor yaw direction 35.

An input device 11, such as a keyboard, may be provided to enable a user to input information into the main controller 10 or any other element of the control system 20.

Figure 3 shows certain elements of the yaw system 30, viewed from above in line with the vertical yaw axis. The yaw system 30 comprises a toothed yaw ring 31 which is mounted to the tower 2. The yaw ring 31 may act as a sliding bearing between the nacelle 3 and the tower 2 and transmit forces from the nacelle 3 to the tower 2.

The yaw system 30 further comprises an active yaw mechanism comprising eight yaw drives, each connected to a main frame of the nacelle 3. Each yaw drive comprises a toothed pinion which is in engagement with the yaw ring 31. Each pinion is connected to a respective yaw motor via a yaw gear.

An exemplary one of the yaw drives is shown in Figure 3, and comprises a vertically mounted pinion 36 driven by a horizontally mounted yaw motor 37 and yaw gear 38. For the remaining yaw drives of Fig. 3, only the pinions are shown whereas the yaw motors and yaw gears are omitted from Figure 3 for the purpose of clarity.

In this example the yaw ring 31 is bolted onto a top flange of the tower 2 and hence does not rotate with the nacelle. In other embodiments, the yaw ring 31 may rotate with the RNA 3, 4 instead of the yaw drives.

In this example, the teeth of the yaw ring 31 are on the outside of the yaw ring 31, but in other embodiments the teeth may be on the inside.

The eight pinions are arranged in three groups of adjacent pinions: a large group 32 of four pinions (including the exemplary pinion 36); a first small group 33 of two pinions and a second small group 34 of two pinions. The large group 32 of pinions is aligned with the rotor axis, as shown by the direction of the arrow 35 in Figure 3. It should be noted that the number and grouping of pinions may vary from the example of Figure 3. It is also possible that the yaw system 30 has only a single pinion, although multiple pinions are preferred. The known locations of the pinions, relative to the rotor yaw direction 35, are stored in memory.

The yaw system 30 of Figure 3 can be operated in an active mode or in a passive mode. In the active mode, the yaw system 30 performs yaw movements by operating the yaw motors, thereby causing the pinions 32-34 to rotate. This, in turn, causes a relative rotational movement between the toothed yaw ring 31 and the yaw drives, and thereby between the tower 2 and the RNA 3, 4.

During the active mode, a yaw function 15 automatically controls the yaw system 30 to yaw the RNA 3, 4 in response to wind direction changes.

During operation of the wind turbine, one or more teeth of the yaw ring 31 may become damaged, or completely break off (leaving a missing tooth). The area most prone to damage is in line with the thrust forces generated by the rotor, which operate in the direction of the arrow 35. Figure 3 shows a damaged tooth 39 located in this area.

In this example only a single damaged tooth 39 is shown, but occasionally multiple teeth may be come broken or damaged at the same time. In this case it is most common for the multiple broken/missing teeth to be adjacent with each other. The following discussion will make reference to a single damaged tooth 39, but the invention is equally applicable in the case of multiple damaged teeth, or one or more missing teeth.

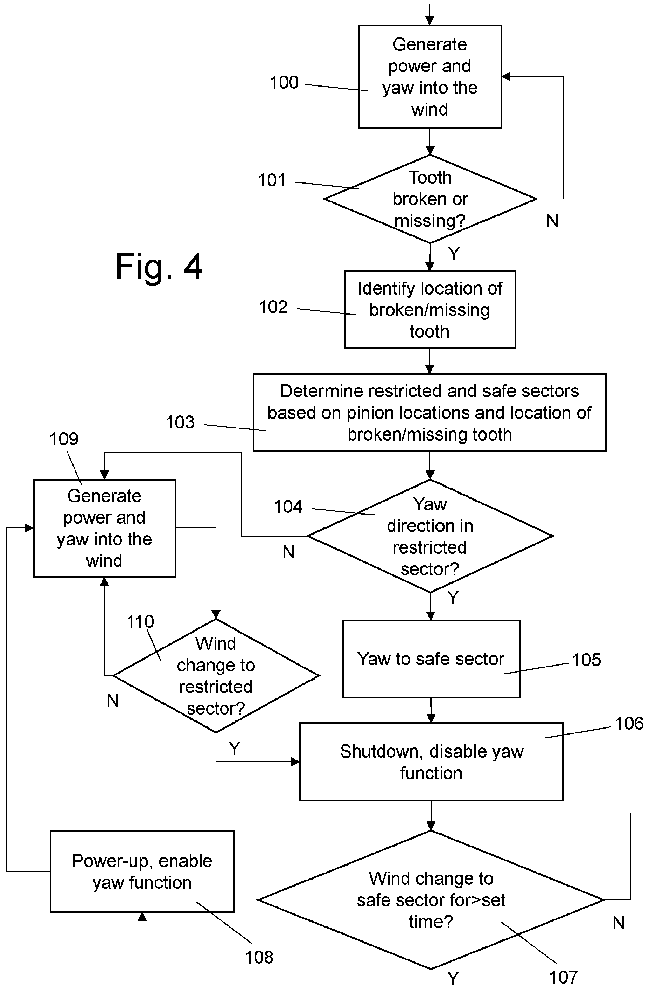

If power is generated by the rotor 4 when the damaged tooth 39 is engaged by a pinion, then the tooth 39 may be damaged further. Undesirable oscillations may also occur in such a situation. Figure 4 gives an example of a method of operating the wind turbine 1 with the purpose of avoiding such problems.

The method of Figure 4 uses various safe sectors and restricted sectors. Figure 3 gives an example of such sectors based on the location of the damaged tooth 39 and the known locations of the groups of pinions 32-34. In this example there are three safe sectors 43-45 and three restricted sectors 40-42. The restricted sectors 40-42 have boundaries 40a,b; 41a,b; 42a,b where they meet the safe sectors 43-45.

Most of the steps of Figure 4 are performed by the main controller 10 and/or the yaw function 15, each of which comprises a computer program product comprising software code adapted to operate the wind turbine when executed on a data processing system, the computer program product being adapted to perform certain steps of the method of Figure 4.

In step 100 the yaw function 15 automatically controls the yaw system 30 to yaw the rotor 4 in response to wind direction changes, and the generator 7 generates power which is injected into the grid 24.

The process of step 100 continues until a broken or missing tooth is identified in step 101, for instance by a degraded performance of the wind turbine. In step 102, the location of the broken or missing tooth is identified, typically by a visual inspection of the yaw ring 31. This location may be input into the main controller 10 via the input device 11, or in any other way.

Next, in step 103, based on the identified location of the damaged or missing tooth and the known locations of the pinions, various safe sectors and restricted sectors are determined by the main controller 10 and stored in memory. Figure 3 gives an example based on the input location of the damaged tooth 39 and the known locations of the groups of pinions 32-34 The safe sectors 43-45 alternate with the restricted sectors 40-42.

Each restricted sector 40-42 corresponds with a respective group 32-34 of adjacent pinions. The group 32 of pinions coincide with the location of the damaged tooth 39 when the rotor yaw direction 35 is in the restricted sector 40 as in Figure 3. The group 34 of pinions coincide with the location of the damaged tooth 39 when the rotor yaw direction 35 is in the restricted sector 41. The group 33 of pinions coincide with the location of the damaged tooth 39 when the rotor yaw direction 35 is in the restricted sector 42.

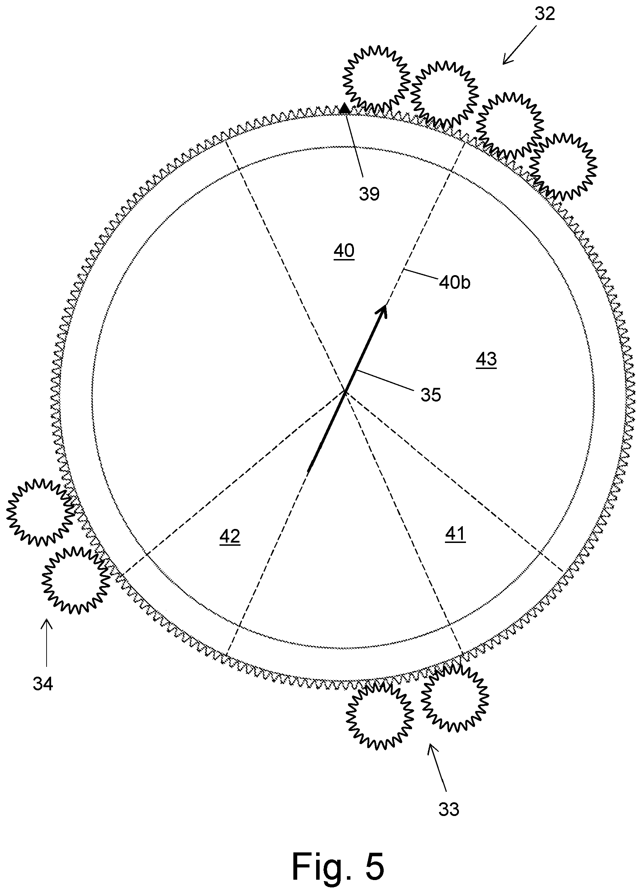

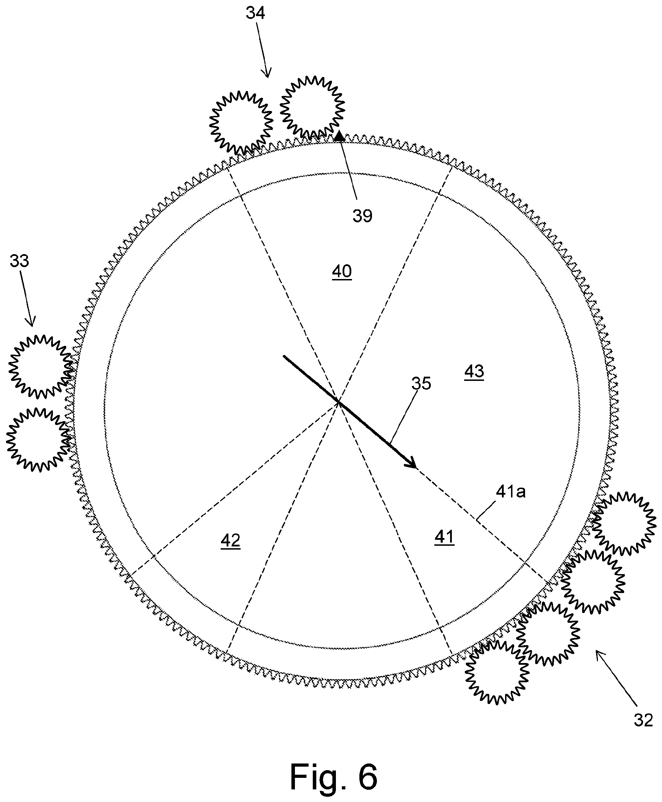

When the rotor yaw direction 35 is in one of the safe sectors 43-45, then none of the pinions coincide with the location of the damaged tooth 39. Figure 5 gives an example where the rotor yaw direction 35 is at the boundary 40b between the restricted sector 40 and the safe sector 43. At this point, the group 32 of pinions has just cleared the broken tooth 39. Figure 6 gives an example where the rotor yaw direction 35 is at the boundary 41a between the restricted sector 41 and the safe sector 43.

In step 104, it is determined whether the rotor yaw direction 35 is currently in a restricted sector, for example as in Figure 3 where the rotor yaw direction 35 is in the restricted sector 40. If NO, then the process jumps to step 109 which will be described below. If YES, then in step 105 the main controller 10 commands the yaw system 30 to yaw into the nearest safe sector, for example the safe sector 43.

In step 106 the yaw function 15 is disabled or otherwise modified to prevent the yaw system 30 from changing the rotor yaw direction 35 from the safe sector 43 and back into the restricted sector 40.

In step 106 the wind turbine is also shut down or otherwise modified so that substantially no power is generated by the rotor 4 and generator 7. This modification may be performed by changing a pitch of one or more blades 5 of the rotor, for instance to "feather" the blades so that they do not produce force which would cause the rotor to spin.

The wind turbine remains shut down until the wind direction changes into a safe sector for more than a set time period. When this is determined in step 107, then in step 108 the previous step 106 is reversed (i.e. the wind turbine is powered up and the yaw function 15 is enabled). In step 109 the yaw function 15 commands the yaw system 30 to yaw the rotor into the wind, and since the rotor direction is now in a safe sector the rotor 4 and generator 7 generate power which is injected into the grid 24.

This generation of power continues until the detection, at step 110, of a change of wind direction from a safe sector into a restricted sector. In response to this wind direction change, the process moves to step 106, disabling or otherwise modifying the yaw function 15 to prevent the yaw system 30 from changing the rotor yaw direction 35 from a safe sector into a restricted sector. In step 106, the wind turbine is also shut down or otherwise modified so that substantially no power is generated by the rotor. As previously described, this modification in step 106 may be performed by changing a pitch of one or more blades 5 of the rotor.

In summary, by following the process of Figure 4, the wind turbine generates power with the rotor in step 109 when the rotor yaw direction 35 is in a safe sector; and disables or otherwise modifies the operation of the wind turbine in step 106 to substantially avoid generation of power by the rotor with the rotor yaw direction 35 in the restricted sector.

In the example described above, the wind turbine is shut down and the yaw function is disabled in step 106. In alternative embodiments, only one of these functions may be performed in step 106. That is, the wind turbine may be shut down in step 106 without disabling the yaw function, or the yaw function may be disabled in step 106 without shutting down the wind turbine. These alternative embodiments are less preferred, but still achieve the aim of substantially avoiding generation of power by the rotor with the rotor yaw direction 35 in a restricted sector.

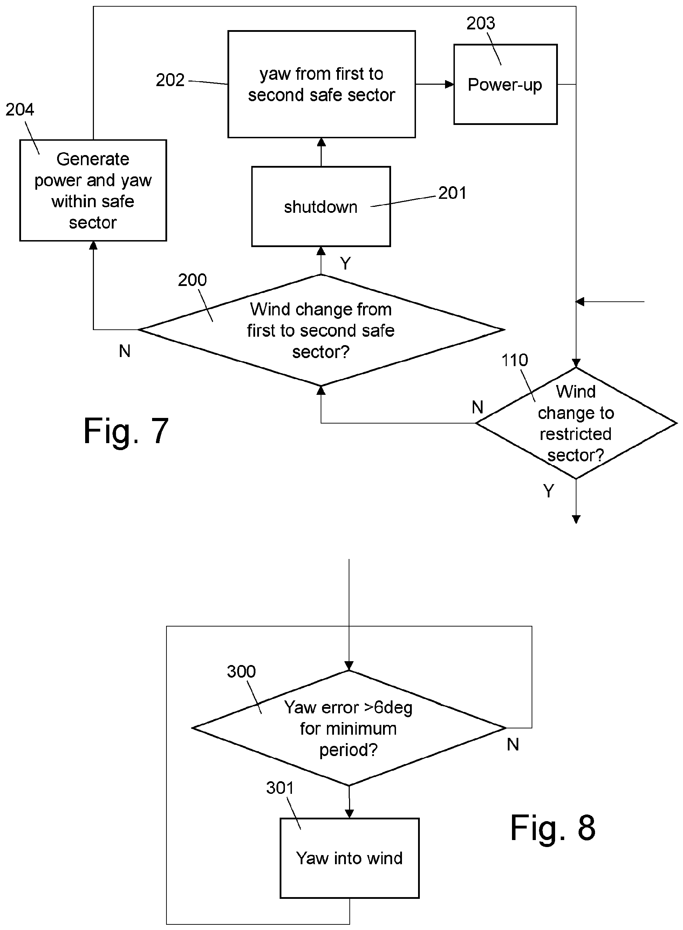

Figure 7 shows further detail of the process of Figure 4 for a case in which the wind direction changes from a first safe sector (for instance safe sector 43) to a second safe sector (for instance safe sector 44). When such a change is detected in step 200, the wind turbine is shut down or otherwise modified in step 201 so that substantially no power is generated by the rotor. This modification may be performed by changing a pitch of one or more blades 5 of the rotor, for instance to "feather" the blades so that they do not produce force which would cause the rotor to spin.

The yaw function 15 then operates the yaw system 30 in step 202 to change the rotor yaw direction 35 from the first one of the safe sectors to the second one of the safe sectors, the rotor yaw direction 35 passing through an intervening one of the restricted sectors (for example restricted sector 41) as it does so. As the rotor yaw direction 35 passes through the restricted sector 41, the location of the group 34 of pinions coincides with the location of the damaged tooth 39, but substantially no power is generated by the rotor as it does so. This avoids further damage to the damaged tooth 39, and also avoids undesirable oscillations which can occur if power is generated as the damaged tooth 39 is engaged by a pinion.

After the rotor yaw direction 35 has reached the second safe sector, the wind turbine powers up in step 203, by reversing step 201 (for instance by changing the blade pitch angle).

If the wind direction has not changed from a first to second safe sector in step 200, then in step 204 the yaw function 15 commands the yaw system 30 to yaw the rotor into the wind within the current safe sector, and since the rotor yaw direction 35 is still in a safe sector the generator 7 continues to generate power which is injected into the grid 24.

Figure 8 shows an example of how the yaw function 15 may operate to automatically control the yaw system 30 in the processes described above. The yaw function 15 measures a yaw error which is the angle between the rotor yaw direction 35 and the wind direction. When the rotor yaw direction 35 is parallel to the wind direction then the yaw error is zero, and if the wind direction changes then a non-zero yaw error is introduced. When this yaw error increases above a threshold (for instance 6 degrees) in step 300, then in step 301 the yaw function 15 causes the yaw system 30 to actively yaw the rotor until the yaw error returns to zero.

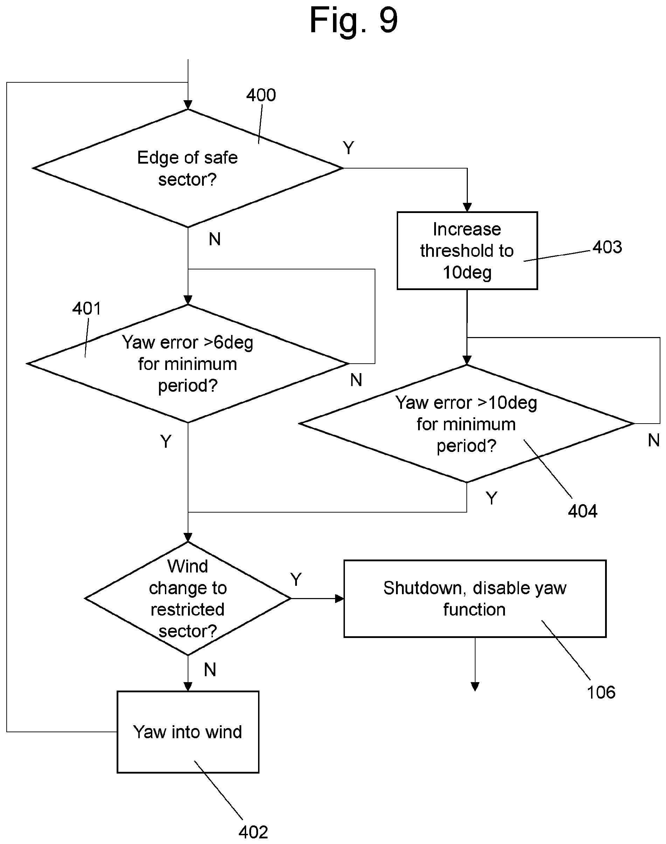

Figure 9 gives a modified example of how the yaw function 15 may operate to automatically control the yaw system 30 when the rotor yaw direction 35 is in a safe sector.

In step 400 a determination is made of whether the rotor yaw direction 35 is near an edge of a safe sector, for instance within a certain number degrees from the edge. If NO, then the yaw function 15 automatically controls the yaw system in steps 401 and 402 to yaw the rotor into the wind in response to wind direction changes above a threshold of 6 degrees. In other words, the threshold for the yaw error is set to 6 degrees. If YES, then the threshold is increased in step 403 (for instance to 10 degrees). Then the yaw function 15 automatically controls the yaw system in steps 403 and 402 to yaw the rotor in response to yaw error rising above the increased threshold. The method of Figure 9 enables the wind turbine to keep generating power for longer when the wind direction is at or near a boundary between a restricted sector and a safe sector.

If the wind direction changes into a restricted sector then the wind turbine is shut down and the yaw function disabled in step 106, as in the processes described above.

Based on the locations of the pinions around the yaw ring, there are three restricted sectors 40-42 shown in Figure 3 where the damaged yaw tooth 39 can come into meshing contact with a pinion.

By way of example, the large restricted sector 40 may have an angular range of 50 degrees between its edges 40a,b and the smaller restricted sectors 41, 42 may each have an angular range of 15 degrees between their respective edges 41a,b and 42a,b.

Optionally a buffer may be added at each edge of the restricted sectors. If a total buffer of 10 degrees is added (5 degrees at each edge) then the restricted sectors 40-42 may be increased in size to have increased angular ranges (θ_{*r*1}, θ_{*r*2} *and* θ_{*r*3}) as follows: ${θ}_{r 1} = {50}^{o} + Buffer \left({10}^{o}\right) = {60}^{o}$ ${θ}_{r 2} = {15}^{o} + Buffer \left({10}^{o}\right) = {25}^{o}$ ${θ}_{r 3} = {15}^{o} + Buffer \left({10}^{o}\right) = {25}^{o}$

Based on the above increased angular ranges, the maximum range of the safe sectors is 250° (360° - 60° - 25° - 25°) in total. These maximum safe sectors are as below:
θ_{*s*1_}*ₘₐₓ =* 95°
θ_{*s*2_}*ₘₐₓ =* 60°
θ_{*s*3_}*ₘₐₓ =* 95°

Based on the number of damaged teeth and total teeth in the yaw ring 31, a damaged sector angle can be calculated. On top of this angle the standard +/- 6 deg yaw error threshold may be taken into consideration to obtain a damaged sector angle θ*_{d}* as below: ${θ}_{d} = \left(\frac{Number of damaged teeth}{Total teeth in yaw ring}X {360}^{o}\right) + \left(Yaw error\left(+/- {6}^{o}\right)\right)$

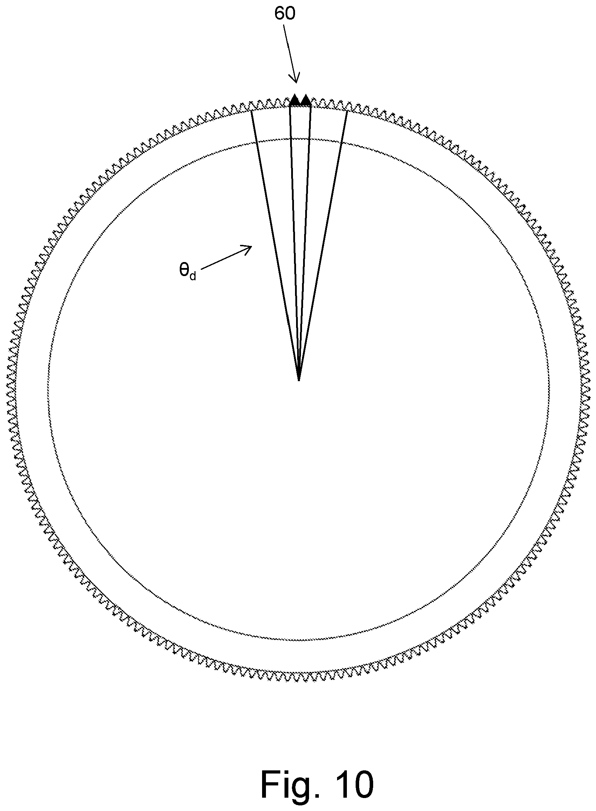

Figure 10 gives an example of a damaged sector (angle θ*_{d}*) in the case of two adjacent damaged teeth 60.

In the safe sectors, the damaged sector of Figure 10 should not overlap with any of the restricted sectors. So the angular ranges of the safe sectors may be reduced compared with the maximum safe sectors as follows: ${θ}_{s 1} = {θ}_{s 1 _ max} - {θ}_{d}$ ${θ}_{s 2} = {θ}_{s 2 _ max} - {θ}_{d}$ ${θ}_{s 3} = {θ}_{s 3 _ max} - {θ}_{d}$

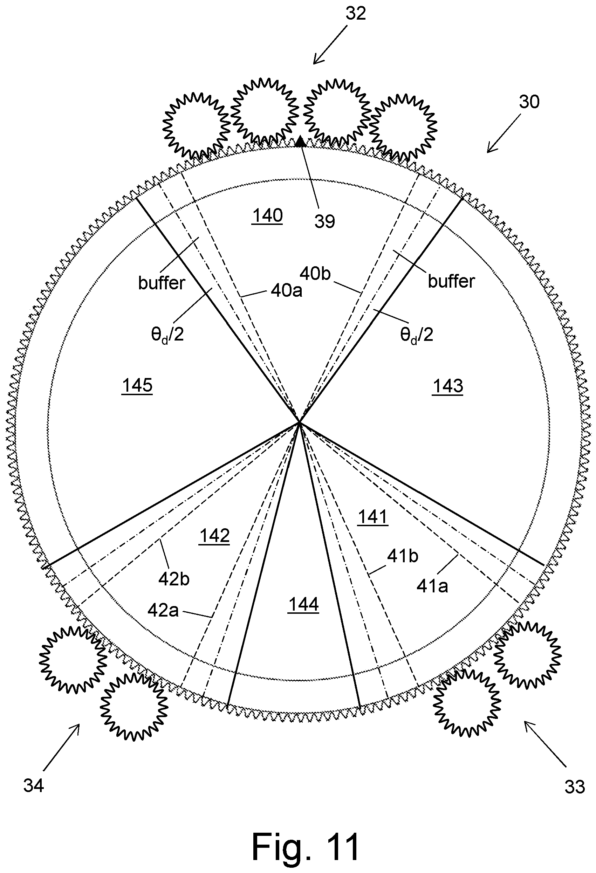

Figure 11 shows the yaw ring 31 with three enlarged restricted sectors 140, 141, 142 which have been enlarged following the principles described above. The enlarged restricted sectors 140, 141, 142 alternate with three reduced safe sectors 143, 144, 145. The boundaries between the sectors 140-145 are indicated by solid lines.

Each enlarged restricted sector 140-142 comprises one of the restricted sectors 40-42 of Figure 3, plus a pair of 5 degree buffer sectors, and a pair of sectors each with an angular range of θ*_{d}*/2.

As noted above, a pinion coincides with the location of the damaged or missing tooth when the rotor yaw direction 35 is in any of the restricted sectors 40-42 of Figure 3. This is also true for the enlarged restricted sectors 140-142 of Figure 11, but with a margin of error added.

Although the invention has been described above with reference to one or more preferred embodiments, it will be appreciated that various changes or modifications may be made without departing from the scope of the invention as defined in the appended claims

## Claims

1. A method of operating a wind turbine (1), the wind turbine comprising a rotor (4) and a yaw system (30), the yaw system comprising: a yaw ring (31) and a pinion (36) engaging the yaw ring, the method comprising: a) operating the yaw system to yaw the rotor in response to wind direction changes, thereby changing a rotor yaw direction (35); b) identifying a location of a damaged or missing tooth (39) of the yaw ring; c) based on the identified location of the damaged or missing tooth and the location of the pinion, determining a safe sector (43, 44, 45) and a restricted sector (40, 41, 42), wherein the pinion coincides with the location of the damaged or missing tooth when the rotor yaw direction is in the restricted sector; d) generating power with the rotor when the rotor yaw direction is in the safe sector; **characterized in that** the method further comprises e) disabling or otherwise modifying the operation of the wind turbine to substantially avoid generation of power by the rotor with the rotor yaw direction in the restricted sector.

2. A method according to claim 1, wherein the wind turbine (1) further comprises a yaw function (15) which automatically controls the yaw system (30) in step a) to yaw the rotor (4) in response to wind direction changes; and step e) comprises: in response to a wind direction change from the safe sector (43, 44, 45) into the restricted sector (40, 41, 42), disabling or otherwise modifying the yaw function to prevent the yaw system from changing the rotor yaw direction from the safe sector into the restricted sector.

3. A method according to claim 1 or 2, wherein step e) comprises: in response to a wind direction change from the safe sector (43, 44, 45) into the restricted sector (40, 41, 42), shutting down or otherwise modifying the operation of the wind turbine (1) so that substantially no power is generated by the rotor (4).

4. A method according to any preceding claim, wherein the pinion (36) is one of a group of adjacent pinions (32, 33, 34) that each engage the yaw ring (31), the restricted sector (40, 41, 42) and the safe sector (43, 44, 45) are determined based on the location of the group of adjacent pinions, and the group of adjacent pinions coincide with the location of the damaged or missing tooth (39) when the rotor yaw direction (35) is in the restricted sector.

5. A method according to any preceding claim, wherein the yaw system (30) has two or more pinions (36) each engaging the yaw ring (31) at a respective location; step b) comprises: based on the identified location of the damaged or missing tooth (39) and the locations of the pinions, determining two or more safe sectors (43, 44, 45) and two or more restricted sectors (40, 41, 42), wherein the safe sectors alternate with the restricted sectors, and when the rotor yaw direction (35) is in each restricted sector a location of a respective one of the pinions coincides with the location of the damaged or missing tooth; and step e) comprises: disabling or otherwise modifying the operation of the wind turbine to substantially avoid generation of power by the rotor (4) with the rotor yaw direction in the restricted sectors.

6. A method according to claim 2 and claim 5, wherein step e) comprises: in response to a wind direction change from one of the safe sectors (43, 44, 45) into one of the restricted sectors (40, 41, 42), disabling or otherwise modifying the yaw function (15) to prevent the yaw system (30) from changing the rotor yaw direction (35) from the one of the safe sectors into the one of the restricted sectors.

7. A method according to claim 5, further comprising: in response to a wind direction change from a first one of the safe sectors (43) to a second one of the safe sectors (44), operating the yaw system (30) to change the rotor yaw direction (35) from the first one of the safe sectors to a second one of the safe sectors, the rotor yaw direction passing through an intervening one of the restricted sectors (41) as it does so; wherein as the rotor yaw direction passes through the intervening one of the restricted sectors, the location of one of the pinions (36) coincides with the location of the damaged or missing tooth (39).

8. A method according to claim 7, wherein step e) comprises: in response to the wind direction change, shutting down or otherwise modifying the operation of the wind turbine (1) so that substantially no power is generated by the rotor (4) as the rotor yaw direction (35) passes through the intervening one of the restricted sectors (41).

9. A method according to claim 8, wherein step d) comprises: generating power with the rotor when the rotor yaw direction (35) is in the first one of the safe sectors (43); and the method further comprises: generating power with the rotor (4) when the rotor yaw direction is in the second one of the safe sectors (44).

10. A method according to claim 3 or claim 8, wherein shutting down or otherwise modifying the operation of the wind turbine (1) so that substantially no power is generated by the rotor (4) comprises: changing a pitch of or more blades (5) of the rotor.

11. A method according to any preceding claim, wherein the restricted sector (40, 41, 42) is determined in step c) by: identifying a range of angles where the location of the pinion (36) coincides with the location of the damaged or missing tooth (39); and adding a buffer at each edge of the range of angles.

12. A method according to any preceding claim, wherein the wind turbine (1) further comprises a yaw function (15) which automatically controls the yaw system (30) in step a) to yaw the rotor (4) in response to wind direction changes above a threshold; and the method further comprises: increasing the threshold in response to the rotor yaw direction (35) approaching an edge of the safe sector (43, 44, 45).

13. A control system (20) configured to operate a wind turbine (1) by a method according to any preceding claim.

14. A wind turbine (1) comprising: a rotor (4); a yaw system (30) comprising a yaw ring (31) and a pinion (36) engaging the yaw ring; and a control system (20) according to claim 13.

15. A computer program product comprising software code adapted to operate a wind turbine (1) when executed on a data processing system, the computer program product being adapted to perform the method of any of claims 1 to 12.

## Patentansprüche

1. Verfahren zum Betreiben einer Windkraftanlage (1), wobei die Windkraftanlage einen Rotor (4) und ein Giersystem (30) umfasst, wobei das Giersystem umfasst: einen Gierring (31) und ein mit dem Gierring kämmendes Ritzel (36), wobei das Verfahren umfasst: a) Betreiben des Giersystems, um den Rotor als Reaktion auf Windrichtungsänderungen zu gieren und dadurch die Gierrichtung (35) des Rotors zu ändern; b) Identifizieren einer Position eines beschädigten oder fehlenden Zahns (39) des Gierrings; c) Bestimmen eines sicheren Sektors (43, 44, 45) und eines eingeschränkten Sektors (40, 41, 42) basierend auf der identifizierten Position des beschädigten oder fehlenden Zahns und der Position des Ritzels, wobei das Ritzel mit der Position des beschädigten oder fehlenden Zahns übereinstimmt, wenn sich die Gierrichtung des Rotors im eingeschränkten Sektor befindet; d) Erzeugen von Leistung mit dem Rotor, wenn sich die Gierrichtung des Rotors im sicheren Sektor befindet; **dadurch gekennzeichnet, dass** das Verfahren ferner umfasst: e) Deaktivieren oder anderweitiges Modifizieren des Betriebs der Windkraftanlage, um die Erzeugung von Leistung durch den Rotor mit der Gierrichtung des Rotors im eingeschränkten Sektor im Wesentlichen zu vermeiden.

2. Verfahren nach Anspruch 1, wobei die Windkraftanlage (1) ferner eine Gierfunktion (15) umfasst, die das Giersystem (30) in Schritt a) automatisch steuert, um den Rotor (4) als Reaktion auf Windrichtungsänderungen zu gieren; und wobei Schritt e) Folgendes umfasst: als Reaktion auf eine Windrichtungsänderung vom sicheren Sektor (43, 44, 45) in den eingeschränkten Sektor (40, 41, 42), Deaktivieren oder anderweitiges Modifizieren der Gierfunktion, um zu verhindern, dass das Giersystem die Gierrichtung des Rotors vom sicheren Sektor in den eingeschränkten Sektor ändert.

3. Verfahren nach Anspruch 1 oder 2, wobei Schritt e) Folgendes umfasst: als Reaktion auf eine Windrichtungsänderung vom sicheren Sektor (43, 44, 45) in den eingeschränkten Sektor (40, 41, 42), Abschalten oder anderweitiges Modifizieren des Betriebs der Windkraftanlage (1), sodass vom Rotor (4) im Wesentlichen keine Leistung erzeugt wird.

4. Verfahren nach einem vorstehenden Anspruch, wobei das Ritzel (36) eines von einer Mehrzahl von benachbarten Ritzeln (32, 33, 34) ist, die jeweils in den Gierring (31) eingreifen, wobei der eingeschränkte Sektor (40, 41, 42) und der sichere Sektor (43, 44, 45) auf der Grundlage der Position der Gruppe benachbarter Ritzel bestimmt werden und die Gruppe benachbarter Ritzel mit der Position des beschädigten oder fehlenden Zahns (39) übereinstimmt, wenn sich die Gierrichtung (35) des Rotors im eingeschränkten Sektor befindet.

5. Verfahren nach einem vorstehenden Anspruch, wobei das Giersystem (30) zwei oder mehr Ritzel (36) aufweist, die jeweils an einer jeweiligen Position in den Gierring (31) eingreifen; Schritt b) umfasst: auf der Grundlage der identifizierten Position des beschädigten oder fehlenden Zahns (39) und der Positionen der Ritzel, Bestimmen von zwei oder mehr sicheren Sektoren (43, 44, 45) und zwei oder mehr eingeschränkten Sektoren (40, 41, 42), wobei sich die sicheren Sektoren mit den eingeschränkten Sektoren abwechseln und wenn sich die Gierrichtung (35) des Rotors in einem der eingeschränkten Sektoren befindet, die Position eines der Ritzel mit der Position des beschädigten oder fehlenden Zahns übereinstimmt; und Schritt e) umfasst: Deaktivieren oder anderweitiges Modifizieren des Betriebs der Windkraftanlage, um die Erzeugung von Leistung durch den Rotor (4) mit der Gierrichtung des Rotors in den eingeschränkten Sektoren im Wesentlichen zu vermeiden.

6. Verfahren nach Anspruch 2 und Anspruch 5, wobei Schritt e) umfasst: als Reaktion auf eine Windrichtungsänderung von einem der sicheren Sektoren (43, 44, 45) in einen der eingeschränkten Sektoren (40, 41, 42), Deaktivieren oder anderweitiges Modifizieren der Gierfunktion (15), um zu verhindern, dass das Giersystem (30) die Gierrichtung (35) des Rotors von einem der sicheren Sektoren in den einen der eingeschränkten Sektoren ändert.

7. Verfahren nach Anspruch 5, ferner umfassend: als Reaktion auf eine Windrichtungsänderung von einem ersten der sicheren Sektoren (43) in einen zweiten der sicheren Sektoren (44), Betreiben des Giersystems (30), um die Gierrichtung (35) des Rotors vom ersten der sicheren Sektoren in einen zweiten der sicheren Sektoren zu ändern, wobei die Gierrichtung des Rotors dabei einen dazwischenliegenden der eingeschränkten Sektoren (41) durchläuft; wobei, wenn die Gierrichtung des Rotors den dazwischenliegenden der eingeschränkten Sektoren durchläuft, die Position eines der Ritzel (36) mit der Position des beschädigten oder fehlenden Zahns (39) übereinstimmt.

8. Verfahren nach Anspruch 7, wobei Schritt e) umfasst: als Reaktion auf die Windrichtungsänderung, Abschalten oder anderweitiges Modifizieren des Betriebs der Windkraftanlage (1), sodass der Rotor (4) im Wesentlichen keine Leistung erzeugt, wenn die Gierrichtung (35) des Rotors den dazwischenliegenden der eingeschränkten Sektoren (41) durchläuft.

9. Verfahren nach Anspruch 8, wobei Schritt d) umfasst: Erzeugen von Leistung mit dem Rotor, wenn sich die Gierrichtung (35) des Rotors im ersten der sicheren Sektoren (43) befindet; und das Verfahren ferner umfasst: Erzeugen von Leistung mit dem Rotor (4), wenn sich die Gierrichtung des Rotors im zweiten der sicheren Sektoren (44) befindet.

10. Verfahren nach Anspruch 3 oder 8, wobei das Abschalten oder anderweitiges Modifizieren des Betriebs der Windkraftanlage (1) so, dass der Rotor (4) im Wesentlichen keine Leistung erzeugt, Folgendes umfasst: Ändern eines Blattwinkels eines oder mehrerer Blätter (5) des Rotors.

11. Verfahren nach einem vorstehenden Anspruch, wobei der eingeschränkte Sektor (40, 41, 42) in Schritt c) bestimmt wird, durch: Identifizieren eines Winkelbereichs, in dem die Position des Ritzels (36) mit der Position des beschädigten oder fehlenden Zahns (39) übereinstimmt; und Hinzufügen eines Puffers an jeder Grenze des Winkelbereichs.

12. Verfahren nach einem vorstehenden Anspruch, wobei die Windkraftanlage (1) ferner eine Gierfunktion (15) umfasst, die das Giersystem (30) in Schritt a) automatisch steuert, um den Rotor (4) als Reaktion auf Windrichtungsänderungen oberhalb eines Schwellenwerts zu gieren; und das Verfahren ferner umfasst: Erhöhen des Schwellenwerts als Reaktion darauf, dass sich die Gierrichtung (35) des Rotors einer Grenze des sicheren Sektors (43, 44, 45) nähert.

13. Steuersystem (20), das so konfiguriert ist, dass es eine Windkraftanlage (1) durch ein Verfahren nach einem vorstehenden Anspruch betreibt.

14. Windkraftanlage (1) umfassend: einen Rotor (4); ein Giersystem (30) umfassend einen Gierring (31) und ein mit dem Gierring in Eingriff stehendes Ritzel (36); und ein Steuersystem (20) nach Anspruch 13.

15. Computerprogrammprodukt, umfassend Softwarecode, der so angepasst ist, dass er eine Windkraftanlage (1) steuert, wenn er auf einem Datenverarbeitungssystem ausgeführt wird, wobei das Computerprogrammprodukt so angepasst ist, dass es das Verfahren nach einem der Ansprüche 1 bis 12 durchführt.

## Revendications

1. Procédé de fonctionnement d'une éolienne (1), l'éolienne comprenant un rotor (4) et un système de lacet (30), le système de lacet comprenant : une bague de lacet (31) et un pignon (36) engageant la bague de lacet, le procédé comprenant : a) l'actionnement du système de lacet pour orienter le rotor en réponse aux variations de direction du vent, modifiant ainsi la direction de lacet du rotor (35) ; b) l'identification de l'emplacement d'une dent endommagée ou manquante (39) de la bague de lacet ; c) en fonction de l'emplacement identifié de la dent endommagée ou manquante et de l'emplacement du pignon, la détermination d'un secteur sûr (43, 44, 45) et d'un secteur restreint (40, 41, 42), dans lequel le pignon coïncide avec l'emplacement de la dent endommagée ou manquante lorsque la direction de lacet du rotor se trouve dans le secteur restreint ; d) la production d'énergie par le rotor lorsque la direction de lacet du rotor se trouve dans le secteur sûr ; **caractérisé en ce que** le procédé comprend en outre e) la désactivation ou la modification du fonctionnement de l'éolienne afin d'éviter sensiblement la production d'énergie par le rotor lorsque la direction de lacet du rotor se trouve dans le secteur restreint.

2. Procédé selon la revendication 1, dans lequel l'éolienne (1) comprend en outre une fonction de lacet (15) qui commande automatiquement le système de lacet (30) à l'étape a) pour orienter le rotor (4) en réponse aux variations de direction du vent ; et l'étape e) comprend : en réponse à une variation de direction du vent du secteur sûr (43, 44, 45) vers le secteur restreint (40, 41, 42), la désactivation ou la modification de la fonction de lacet pour empêcher le système de lacet de modifier la direction de lacet du rotor du secteur sûr vers le secteur restreint.

3. Procédé selon la revendication 1 ou 2, dans lequel l'étape e) comprend : en réponse à une variation de direction du vent du secteur sûr (43, 44, 45) vers le secteur restreint (40, 41, 42), l'arrêt ou la modification du fonctionnement de l'éolienne (1) de sorte que sensiblement aucune énergie ne soit générée par le rotor (4).

4. Procédé selon une quelconque revendication précédente, dans lequel le pignon (36) fait partie d'un groupe de pignons adjacents (32, 33, 34) qui engagent chacun la bague de lacet (31), le secteur restreint (40, 41, 42) et le secteur sûr (43, 44, 45) sont déterminés en fonction de l'emplacement du groupe de pignons adjacents, et le groupe de pignons adjacents coïncide avec l'emplacement de la dent endommagée ou manquante (39) lorsque la direction de lacet du rotor (35) se trouve dans le secteur restreint.

5. Procédé selon une quelconque revendication précédente, dans lequel le système de lacet (30) présente deux pignons ou plus (36) engageant chacun la bague de lacet (31) à un emplacement respectif ; l'étape b) comprend : en fonction de l'emplacement identifié de la dent endommagée ou manquante (39) et des emplacements des pignons, la détermination de deux secteurs sûrs ou plus (43, 44, 45) et de deux secteurs restreints ou plus (40, 41, 42), dans lequel les secteurs sûrs alternent avec les secteurs restreints, et lorsque la direction de lacet du rotor (35) se trouve dans chaque secteur restreint, l'emplacement de l'un respectif des pignons coïncide avec l'emplacement de la dent endommagée ou manquante ; et l'étape e) comprend : la désactivation ou la modification du fonctionnement de l'éolienne afin d'éviter sensiblement la production d'énergie par le rotor (4) lorsque la direction de lacet du rotor se trouve dans les secteurs restreints.

6. Procédé selon la revendication 2 et la revendication 5, dans lequel l'étape e) comprend : en réponse à une variation de direction du vent de l'un des secteurs sûrs (43, 44, 45) vers l'un des secteurs restreints (40, 41, 42), la désactivation ou la modification de la fonction de lacet (15) pour empêcher le système de lacet (30) de modifier la direction de lacet du rotor (35) de l'un des secteurs sûrs vers l'un des secteurs restreints.

7. Procédé selon la revendication 5, comprenant en outre : en réponse à une variation de direction du vent d'un premier des secteurs sûrs (43) à un second des secteurs sûrs (44), l'actionnement du système de lacet (30) pour modifier la direction de lacet du rotor (35) du premier des secteurs sûrs à un second des secteurs sûrs, la direction de lacet du rotor passant par un secteur intermédiaire des secteurs restreints (41) lorsqu'il le fait ; dans lequel lors du passage de la direction de lacet du rotor par le secteur intermédiaire des secteurs restreints, l'emplacement de l'un des pignons (36) coïncide avec l'emplacement de la dent endommagée ou manquante (39).

8. Procédé selon la revendication 7, dans lequel l'étape e) comprend : en réponse à la variation de direction du vent, l'arrêt ou la modification du fonctionnement de l'éolienne (1) de sorte qu'aucune énergie ne soit générée par le rotor (4) lorsque la direction de lacet du rotor (35) passe par l'un intermédiaire des secteurs restreints (41).

9. Procédé selon la revendication 8, dans lequel l'étape d) comprend : la génération d'énergie avec le rotor lorsque la direction de lacet du rotor (35) se trouve dans le premier des secteurs sûrs (43) ; et le procédé comprend en outre : la génération d'énergie avec le rotor (4) lorsque la direction de lacet du rotor se trouve dans le second des secteurs sûrs (44).

10. Procédé selon la revendication 3 ou la revendication 8, dans lequel l'arrêt ou la modification du fonctionnement de l'éolienne (1) de sorte que sensiblement aucune énergie ne soit générée par le rotor (4) comprend : la modification d'un pas d'une ou plusieurs pales (5) du rotor.

11. Procédé selon une quelconque revendication précédente, dans lequel le secteur restreint (40, 41, 42) est déterminé à l'étape c) en : identifiant une plage d'angles où l'emplacement du pignon (36) coïncide avec l'emplacement de la dent endommagée ou manquante (39) ; et en ajoutant une zone tampon à chaque bord de la plage d'angles.

12. Procédé selon une quelconque revendication précédente, dans lequel l'éolienne (1) comprend en outre une fonction de lacet (15) qui commande automatiquement le système de lacet (30) à l'étape a) pour orienter le rotor (4) en réponse aux variations de direction du vent au-dessus d'un seuil ; et le procédé comprend en outre : l'augmentation du seuil en réponse à la direction de lacet du rotor (35) s'approchant d'un bord du secteur sûr (43, 44, 45).

13. Système de commande (20) configuré pour faire fonctionner une éolienne (1) par un procédé selon une quelconque revendication précédente.

14. Éolienne (1) comprenant : un rotor (4) ; un système de lacet (30) comprenant une bague de lacet (31) et un pignon (36) engageant la bague de lacet ; et un système de commande (20) selon la revendication 13.

15. Produit de programme informatique comprenant un code logiciel adapté pour faire fonctionner une éolienne (1) lorsqu'il est exécuté sur un système de traitement de données, le produit de programme informatique étant adapté pour exécuter le procédé selon l'une quelconque des revendications 1 à 12.
